**Europäisches Patentamt**

(19) **European Patent Office**

**Office européen des brevets**

(11) Veröffentlichungsnummer: **0 082 549**
**B1**

(12) **EUROPÄISCHE PATENTSCHRIFT**

(45) Veröffentlichungstag der Patentschrift:
**27.11.85**

(51) Int. Cl.⁴: **D 01 H 1/244**, F 16 C 27/02

(21) Anmeldenummer: **82201556.6**

(22) Anmeldetag: **08.12.82**

(54) Antrieb und Lagerung eines Offen-End-Spinnaggregates.

(30) Priorität: **22.12.81 CH 8196/81**

(43) Veröffentlichungstag der Anmeldung:
**29.06.83 Patentblatt 83/26**

(45) Bekanntmachung des Hinweises auf die Patenterteilung:
**27.11.85 Patentblatt 85/48**

(84) Benannte Vertragsstaaten:
**CH DE FR GB IT LI**

(56) Entgegenhaltungen:
**CH - A - 598 503**
**DE - A - 2 303 051**
**DE - A - 2 355 769**
**DE - A - 2 653 927**
**FR - A - 1 380 813**
**FR - A - 2 277 915**
**FR - A - 2 329 892**
**GB - A - 1 111 362**
**US - A - 3 873 886**

(73) Patentinhaber: **BBC Aktiengesellschaft Brown, Boveri & Cie., Haselstrasse, CH-5401 Baden (CH)**

(72) Erfinder: **Müller, Alfred, Marktmatten 1,**
**CH-5600 Lenzburg (CH)**
Erfinder: **Seiffert, Harry, Hägelerstrasse 75,**
**CH-5400 Baden (CH)**

**Beschreibung**

Die Erfindung bezieht sich auf eine Offen-End-Spinnvorrichtung, die im wesentlichen aus einem Elektromotor besteht, dessen Rotor mitsamt Spinntopf auf einer Hohlwelle befestigt ist, welche Hohlwelle auf einem Lagerzapfen gelagert ist.

Eine derartige Vorrichtung ist z.B. aus der CH-A-598 503 bekannt.

Die Anforderungen, welche an die im Offen-End-Spinnverfahren arbeitenden Textilmaschinen gestellt werden, sind im wesentlichen folgende:
— Hohe Produktionsleistung pro Maschineneinheit
— Lange Lebensdauer
— Kurze Stillstandszeiten
— Grosse Revisionsintervalle
— Geringer Schallpegel
— Grosse Flexibilität für einen breiten Garnnummernbereich.

Diesen Forderungen kann aber nur mit Maschinenkonstruktionen nachgekommen werden, die im wesentlichen ein störungsfreies Spinnen mit sehr hohen Drehzahlen und eine rasche Austauschbarkeit der Spinntöpfe mit unterschiedlichen Abmessungen bei minimalen Betriebsstillstandszeiten ermöglichen. Die notwendige Robustheit der konstruktiven Ausführungen und die notwendige Laufruhe der Rotoren bei hohen Drehzahlen, welche die Lagerung der Rotoren betreffen, sind hierfür eine wichtige Voraussetzung.

In der CH-A-598 503 wird ein Spinnaggregat der oben erwähnten Gattung beschrieben. Hierbei bildet die Rotorwelle mit dem Läufer des Elektromotors gemeinsam mit Wälzlagern eine Baueinheit, die eine feste Aufnahme im Gehäuseteil der Maschine mittels Einklebens und gegebenenfalls durch zusätzliche mechanische Verankerung durch Nut und Feder findet.

Die Verwendung von Wälzlagern für hohe Rotordrehzahlen ist jedoch problematisch, da diese zu Reibungsverlusten führen können, die sich in Wärme umsetzen und diese auf den Rotor und den Spinntopf übertragen. Die konstruktive Ausbildung gemäss CH-A-598 503 sieht zwar die Anwechselbarkeit des Läuferteiles im Textilbetrieb vor, jedoch ist deren Realisierbarkeit dort nicht beschrieben. Sie dürfte jedoch arbeits- und zeitaufwendig sein.

Darüber hinaus verbleiben — bedingt durch den Spinnprozess — in der Spinnrille des Spinntopfes in unregelmässiger Verteilung Anhaftungen von Fasermaterialrückständen, und es setzen sich Schmutzteilchen in der Spinnrille ab. Dadurch wird die mit hoher Drehzahl rotierende Masse des Spinntopfes, der Hohlwelle und des Rotorankers durch eine undefinierte und in Funktion der Zeit sowohl in Betrag und Richtung veränderliche Unwucht in ihrer Laufruhe gestört. Die daraus resultierenden Taumelbewegungen des Rotors üben Zwangskräfte auf starr angeordnete Radiallager aus und wirken zerstörend auf derartige Lagersysteme.

Ausgehend vom vorstehend geschilderten Stand der Technik liegt der Erfindung die Aufgabe zugrunde, eine Offen-End-Spinnvorrichtung zu schaffen, die in einem sehr hohen Drehzahlbereich betriebssicher arbeitet, wobei die unwuchtbehaftete rotierende Masse jederzeit weitgehend ungestört um ihre Hauptträgheitsachse drehen kann.

Die Lösung dieser Aufgabe erfolgt durch die im Patentanspruch 1 gekennzeichnete Erfindung.

Diese konstruktive Ausbildung weist folgende Vorteile auf:
— Der Lagerkörper kann infolge der Möglichkeit radialer Auslenkung gegenüber dem starr eingespannten Lagerzapfen den Veränderungen der Drehachse des Rotors in jedem Betriebszustand folgen. Dadurch werden die durch Unwucht des Rotors hervorgerufenen, teilweise auf die Radialgleitlager einwirkenden Kräfte zum grossen Teil eliminiert und ein frühzeitiger Verschleiss oder die Zerstörungen der Lager vermieden.
— Durch die radial zentrierende, elastische Abstützung durch das Lagerkörpergelenk kann eine genaue zurückstellende zentrische Anordnung des Lagerkörpers gegenüber dem Lagerzapfen erreicht werden.

Gemäss Anspruch 2 ist das Lagerkörpergelenk etwa im Bereich des Schwerpunktes des Rotors, der Hohlwelle und des Spinntopfes angeordnet. Dadurch werden die Bestandteile der gesamten vom Rotor eingeprägten Kräfte auf einem festen Punkt, dem Schwerpunkt zusammengefasst, und begünstigt durch die kinematische elastische Führung des Rotors durch die Radialgleitlager können keine Zwangskräfte auf die Radialgleitlager ausgeübt werden. Der Rotor ist somit in seinem Schwerpunkt radial starr, jedoch durch die rückstellende Kraft des Lagerkörpergelenkes in axialer Richtung elastisch geführt.

Nach Anspruch 3 ist in einer radialen Nut des Lagerzapfens gegenüber dem spinntopfseitigen Ende des Lagerzapfens eine elastische Abstützung vorgesehen, auf welche sich mit seiner inneren Fläche der Lagerkörper abstützt, wodurch der Lagerkörper gegenüber dem Lagerzapfen elastisch auslenkbar geführt ist.

Da der Lagerkörper im Schwerpunkt des Rotors elastisch schwenkbar geführt ist, können die durch den Rotor auf den Lagerkörper eingeprägten Trägheitskräfte und Kreiselmomente sich auf diesen gegenüber dem spinntopfseitigen Abschnitt des Lagerkörpers infolge Hebelwirkung auswirken und der Vorteil gemäss Anspruch 3 ist darin zu sehen, dass der Lagerkörper an diesen Stellen abgestützt ist.

Entsprechend Anspruch 4 ist in einer radialen Nut des Lagerkörpers gegenüber dem spinntopfseitigen Ende des Lagerkörpers eine elastische Abstützung vorgesehen, wodurch der Lagerkörper gegenüber dem Lagerzapfen elastisch schwenkbar geführt ist. Der Vorteil gemäss Anspruch 4 ist derselbe wie derjenige von Anspruch 3, jedoch dürfte aus konstruktiven Gründen, der einen oder der anderen Variante der Vorzug gegeben werden.

Gemäss Anspruch 5 ist der Elektromotor mit wenigstens einem schwingungsdämpfenden Element in einem Maschinengehäuse gelagert, um die im Spinntopf und/oder in den Radiallagern verursachten, und auf den Rotor übertragenen Schwingungen über den Lagerzapfen und das Gehäuse des Elektromotors zu den schwingungsdämpfenden Elementen zu führen, wo sie eliminiert werden. Der Vorteil gemäss Anspruch 5 besteht darin, dass die Schwingungen über einen genau definierten Weg zu den schwingungsdämpfenden Elementen geführt werden.

Entsprechend Anspruch 6 ist das Lagerkörpergelenk hohlzylindrisch ausgebildet und besteht aus einem elastischen Material, wobei die Elastizität des Lagerkörpergelenkes sowohl durch das Material als auch durch dessen geometrische Ausbildung und dimensionierung bestimmt ist.

Nach Anspruch 7 besteht das Lagerkörpergelenk aus einem hohlzylindrischen Körper, in dessen Inneren ein Kontaktring angeordnet ist, dessen Innenbohrung dem äusseren Durchmesser des Lagerzapfens in der Kontaktstelle entspricht, und parallel zur Achse des Lagerkörpergelenkes Schlitze ausgeführt sind, die sich nahezu über die gesamte Höhe in der Zylindrische und wenigstens teilweise in den Kontaktring hinein erstrecken, wodurch im Lagerkörpergelenk elastische Lamellen gebildet werden.

Der Vorteil gemäss Anspruch 6 und 7 ist darin zu sehen, dass diese Ausbildungsform des Lagerkörpergelenkes optimale elastische Eigenschaften in Axialrichtung und gegenüber Schwenkbewegungen ergibt und dass den hohen Anforderungen hinsichtlich Beibehaltung der elastischen Eigenschaften unter Dauerbeanspruchung Genüge geleistet wird.

Nach Anspruch 8 ist das Lagerkörpergelenk mit seiner äusseren Fläche mit dem Lagerkörper und mit der Fläche des Kontaktringes mit dem Lagerzapfen fest verbunden. Diese Verbindung gewährleistet eine hohe Sicherheit der mechanischen Befestigung der unbeweglichen Maschinenteile unter hohen Biege- und Torsionsbeanspruchungen.

Nach Anspruch 9 ist zwischen den elastischen Lamellen des Lagerkörpergelenkes und dem Lagerzapfen ein Spalt ausgebildet, der in der Lage ist die Auslenkungsbewegung des Lagerkörpergelenkes zu ermöglichen.

Diese konstruktive Anordnung erlaubt ein vom Lagerzapfen ungehindertes elastisches radiales Ausschwenken und Kippen des Lagerkörpers.

Gemäss Anspruch 10 ist auf dem Lagerkörper im Bereich des Schwerpunktes des Rotors ein erstes gasdynamisches Radialgleitlager und gegenüber dem spinntopfseitigen Endabschnitt des Lagerkörpers ein zweites gasdynamisches Radialgleitlager angeordnet, welche Lager einstückig oder fest mit dem Lagerkörper verbunden sind.

Die Vorteile entsprechend Anspruch 10 sind darin zu sehen, dass eine genaue Fluchtung der beiden Lagerfunktionsflächen ermöglicht wird, dass eine einfache Bearbeitung der beiden Funktionsflächen in einer Aufspannung durchgeführt werden kann, dass eine grosse Genauigkeit bei den Mass-, Form- und Lagetoleranzen erreicht werden kann, und dass keine Montagefehler und keine Schiefstellungen oder Verkantungen der Funktionsflächen möglich sind.

Nach Anspruch 11 besteht das Lagerkörpergelenk aus Stahl. Es werden damit hohe elastische Eigenschaften mit grosser Festigkeit gepaart.

Gemäss Anspruch 12 bestehen der Lagerkörper und die Funktionsflächen des Lagerzapfens aus Hartwerkstoffen oder weisen Oberflächen auf, die aus Hartwerkstoffen bestehen oder welche Oberflächen gehärtet sind. Mit diesen Werkstoffen können sehr gute Lagergleiteigenschaften und eine hohe Lebensdauer, gepaart mit optimaler Notlaufeigenschaften der Lager erreicht werden.

Entsprechend Anspruch 13 bestehen sowohl die elastischen Abstützungen, als auch das schwingungsdämpfende elastische Elemente vorzugsweise aus Gummi. Mit diesem kostengünstigen Material können hohe Dämpfungseigenschaften unter Dauerbeanspruchung erzielt werden.

Die Erfindung wird nachstehend anhand des in der Zeichnung dargestellten Ausführungsbeispieles näher erläutert:

In der Zeichnung zeigt:

Fig. 1    eine Ansicht eines Offen-End-Spinnmotors, wobei die rechte Hälfte als Axialschnitt dargestellt ist;

Fig. 2    einen Teil eines Axialschnittes gemäss Fig. 1, jedoch in einer weiteren Variante;

Fig. 3    einen Axialschnitt durch das Lagerkörpergelenk einschliesslich der benachbarten Teile;

Fig. 4    einen Radialschnitt durch ein Lagerkörpergelenk gemäss Fig. 3.

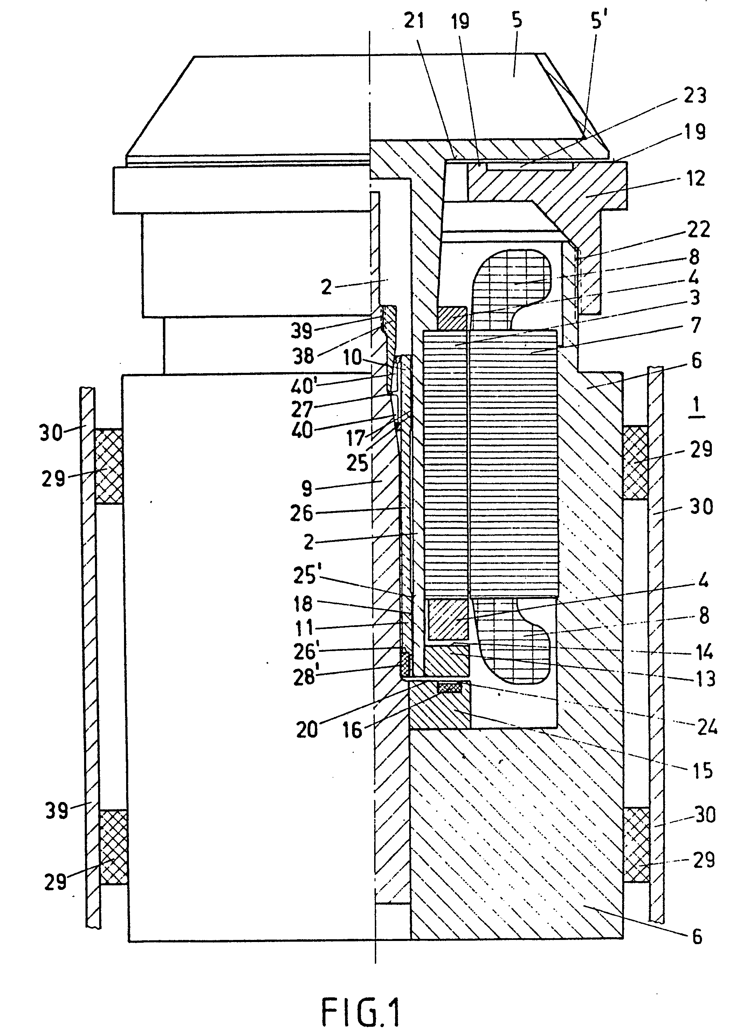

Die Spinnvorrichtung besteht gemäss Fig. 1 grundsätzlich aus einem Elektromotor mit einem Stator 6, 7, 8, 9 und einem Rotor 2, 3, 4 mitsamt Spinntopf 5. In dem Gehäuse 6 sind das Statorblechpaket 7, einschliesslich der Wicklung, von der in der Zeichnung lediglich die Wickelköpfe 8 ersichtlich sind, angeordnet. Im massiven unteren Teil des Gehäuses 6 befindet sich maschinenmittig der Lagerzapfen 9, der mit dem Gehäuse 6 fest verbunden ist. Der Rotor 2, 3, 4 besteht aus einer Hohlwelle 2, die mit einem Spinntopf 5 einstückig oder fest verbunden ist. Im Spinntopf 5 ist die Spinnrille 5' ersichtlich. Auf der Hohlwelle 2 sind ausserdem das Rotorblechpaket 3 und die Rotorwicklung 4 angeordnet. Zur Lagerung der sehr schnell rotierenden Hohlwelle 2 einschliesslich sämtlicher rotierender Teile 3, 4, 5 sind zwei gasdynamische Radialgleitlager 10, 11 und mindestens ein gasdynamisches Axialgleitlager 19, 23 bzw. 20, 24 vorgesehen.

Die Forschungsvereinigung Verbrennungskraftmaschinen e.V. hat im Heft R 343, 1976 ein Referat von Prof. J. Glienicke Universität Karlsruhe veröffentlicht, welches anlässlich der Informationstagung der Forschungsvereinigung Verbrennungskraftmaschinen e.V. am 21.9.1978 in Wolfsburg gehalten wurde, und das theoretische und experimentelle Untersuchungen über die in der Erfindung zugrundegelegten gasdynamischen Lager für kleine Turbomaschinen beschreibt.

Ein erstes Radiallager 10 ist im spinntopfseitigen Abschnitt auf dem Lagerträger 26 im Bereich des Schwerpunktes des Rotors 2, 3, 4, 5 und ein zweites Radiallager 11 ist ebenfalls auf dem Lagerträger 26 am entgegengesetzten Ende jeweils einstückig oder fest angeordnet. Der Lagerkörper 26 ist hülsenförmig ausgebildet und umschliesst mit Spiel den Lagerzapfen 9. An seinem spinntopfseitigen Ende ist der Lagerkörper 26 über ein Lagerkörpergelenk 27 fest, aber elastisch schwenkbar mit dem Lagerzapfen 9 verbunden.

Gegenüber dem spinntopfseitigen Endabschnitt des Lagerkörpers 26 ist in einer radialen Nut 26' eine elastische Abstützung 28' vorgesehen, wodurch der Lagerkörper 26 gegenüber dem Lagerzapfen 9 gleichfalls elastisch schwenkbar geführt ist.

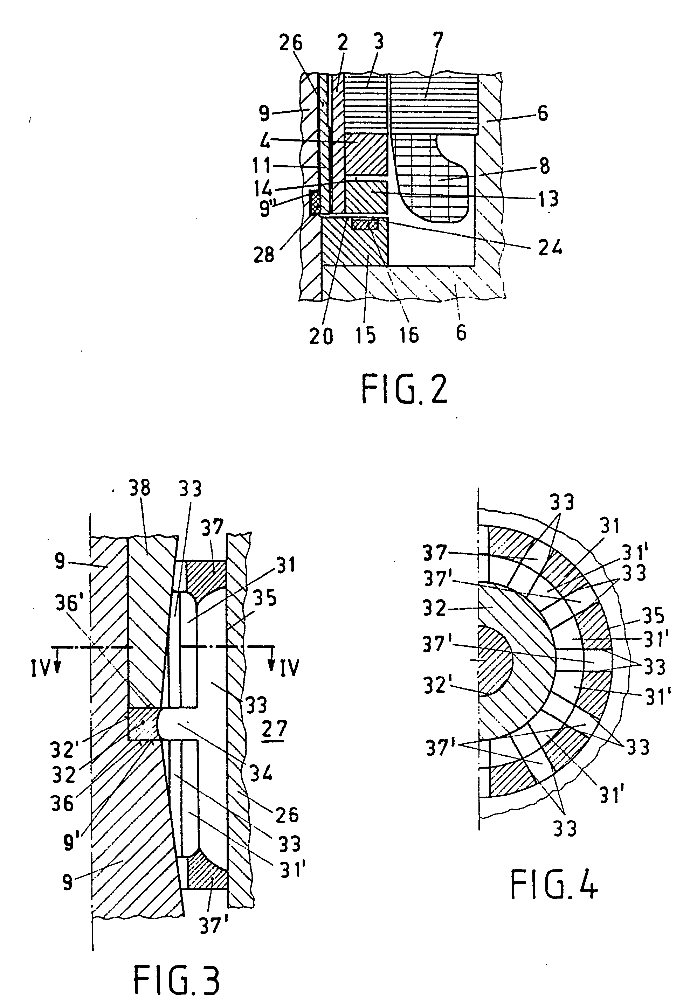

In Fig. 2 ist ein Axialschnitt gemäss Fig. 1 veranschaulicht, wobei in einer weiteren Variante sich die elastische Abstützung 28 in einer radialen Nut 9' des Lagerzapfens 9 befindet, wodurch der Lagerkörper 26 gegenüber dem Lagerzapfen 9 gleichfalls elastisch auslenkbar geführt ist.

Das Lagerkörpergelenk 27 ist in dem Ausführungsbeispiel gemäss Fig. 1 einerseits durch die Überwurfmutter 38 mittels Gewinde 39 fest mit dem Lagerzapfen 9 verbunden, und andererseits besteht eine starre Verbindung zwischen dem Lagerkörpergelenk 27 und dem Lagerkörper 26. Zwischen dem Lagerkörpergelenk 27 und dem Lagerzapfen 9 bzw. der Überwurfmutter 38 ist ein Spalt 40 ausgebildet, der die radiale Auslenkung des Lagerkörpergelenkes 27 in bezug auf den Lagerzapfen 9 ermöglicht.

Eine anschaulichere Darstellung des Lagerkörpergelenkes 2, in grösserem Massstab einschliesslich seiner umgebenden Funktionsteile ist in Fig. 3 und 4 zu sehen.

In Fig. 1 ist weiterhin ein ersten Axiallager 19, 23 in der Stirnfläche des Lagerschildes 12, das mit dem Gehäuseteil 6' mittels Gewinde 22 oder fest verbunden ist, ausgebildet und besteht aus der Funktionsfläche 19 und der Axiallagertasche 23. Ein zweites Axiallager 20, 24 ist in der ringförmigen Erweiterung 15 des Lagerzapfens 9 angeordnet und besteht aus der Funktionsfläche 20 und der Axiallagertasche 24. In der beispielsweisen Ausführungsform gemäss Fig. 1 sind zwei Axiallager 19, 23; 20, 24 dargestellt. Für die Funktionstüchtigkeit der Maschine ist jedoch nur eines von beiden notwendig.

Da der Rotor 2, 3, 4 mitsamt Spinntopf 5 von der Spinnseite her in die Statorbohrung auf einfache Weise ein- und ausschiebbar ist und nicht mechanisch verriegelt wird, kommt der Positionierung des Rotors 2, 3, 4, 5 im Stator 6, 7, 8, 9 eine erhöhte Bedeutung zu. Die genaue Positionierung des Rotors 2, 3, 4, 5 in jeden Drehzahlbereich erfolgt durch einen Permanentmagnet 16. Dieser befindet sich in der ringförmigen Erweiterung 15 des Lagerzapfens 9. Der in der ringförmigen Erweiterung 15 befindliche Permanentmagnet 16 übt einen magnetischen Zug auf den gegenüberliegenden Balancierring 13 aus und drückt den Rotor 2, 3, 4, 5 mit der unteren Fläche 14 des Balancierringes 13 gegen die Funktionsfläche 20 des zweiten Axiallagers 20, 24. Auf diese Weise ist der Rotor 2, 3, 4 mitsamt Spinntopf 5 in jedem Drehzahlbereich in genau definierter Positionierung im Stator 6, 7, 8, 9 gehalten.

Der Balancierring 13, der sich am spinntopfseitigen abgewandten Ende der Hohlwelle 2 befindet, dient neben der Funktion der axialen Lagerung des Rotors 2, 3, 4, 5 weiterhin zum Auswuchten von eventuell auftretender geringfügiger Unwucht des Rotors 2, 3, 4, 5 bei sehr hohen Drehzahlen.

In Fig. 1 ist ersichtlich, dass der Elektromotor 1 durch elastisch schwingungsdämpfende Elemente 29 in der Tragkonstruktion 30 gehalten wird.

Fig. 3 zeigt einen Axialschnitt durch das Lagerkörpergelenk 27 einschliesslich der benachbarten Teile 9, 26, 38. Das Lagerkörpergelenk 27 besteht prinzipiell aus einer Büchse mit einem hohlzylindrischen Teil 31, 33, 37, 37' und einem einstückig mit diesem verbundenen Kontaktring 32, wobei der Kontaktring 32 eine Innenbohrung 32' aufweist, die in der Kontaktstelle dem Aussendurchmesser des Lagerzapfens 9 entspricht. In dem hohlzylindrischen Teil 31, 33, 37, 37' des Lagerkörpergelenkes 27 sind achsparallel über den gesamten Umfang gleichmässig verteilte Schlitze 33, 34 angeordnet, die sich bis in den Kontaktring 32 hinein erstrecken. Die Schlitze sind im hohlzylindrischen Teil 31, 33, 37, 37' mit der Bezugsziffer 33 und diejenigen im Kontaktring 32 quer zur Achsrichtung mit der Bezugsziffer 34 bezeichnet. Durch die Schlitze 33, 34 werden sowohl im hohlzylindrischen Teil 31, 33, 37, 37' als auch im Kontaktring 32 Lamellen 31, 31' ausgebildet, die den Kontaktring 32 und die äussere Fläche 35 des Lagerkörpergelenkes 27 als federnde Elemente verbinden. In Fig. 3 sind lediglich die achsparallelen Lamellen 31 erkennbar. In Fig. 4 sind jedoch beide Lamellen 31, 31' deutlich zu sehen. Die Lamellen 31 erstrecken sich achsparallel nahezu über die gesamte Höhe des Lagerkörpergelenkes 27 und laufen in ringförmigen Endpartien 37, 37' aus, während die senkrecht zur Achse des Lagerkörpergelenkes in den Kontaktring 32 sich hineinerstreckenden Lamellen 31' in dem Kontaktring 32 selbst auslaufen.

Wie in Fig. 3 ersichtlich, verjüngt sich ein Teil des Lagerzapfens 9 stufenartig und befindet sich mit diesem verjüngten Teil in der Innenbohrung 32' des Kontaktringes 32, so dass das Lagerkörpergelenk 27 zentrisch zum Lagerzapfen 9 angeordnet ist. Der Kontaktring 32 liegt mit seiner Fläche 36 auf der Abstufung, dem Befestigungsteil 9', des Lagerzapfens 9 auf und wird durch die Überwurfmutter 38, die in Fig. 3 nur andeutungsweise dargestellt ist, mit der Fläche 36' des Kontaktringes 32 fest mit dem Lagerzapfen 9 verbunden. Andererseits ist das Lagerkörpergelenk 27 mit seiner Aussenfläche 35 fest mit dem Lagerkörper 26 verbunden, der in Fig. 3 und ebenfalls in Fig. 4 nur andeutungsweise dargestellt ist. Die feste Verbindung zwischen dem Lagerkörpergelenk 27 und dem Lagerkörper 26 kann beispielsweise durch Aufpressen hergestellt werden. Aber die Verbindungsformen zwischen Lagerkörpergelenk 27 und Lagerzapfen 9 bzw. Lagerkörper 26 bleiben selbstverständlich nicht auf die im Ausführungsbeispiel dargestellten Schraub- bzw. Pressverbindung beschränkt, sondern es können darüber hinaus Schweiss- und/oder Löt- und/oder Verklebeverbindungen zur Anwendung kommen.

Fig. 4 zeigt einen Radialschnitt durch ein Lagerkörpergelenk 27 einschliesslich seiner umliegenden Teile, den Lagerzapfen 9, den Lagerkörper 26 und die Überwurfmutter 38, wobei besonders auf die einstückige Ausbildung der Lamellen 31, 31', die sich einmal parallel und zum anderen senkrecht zur Achsrichtung des Lagerkörpergelenkes 27 erstrecken, hingewiesen wird. Mit dieser beispielsweisen Ausbildungsform der Lamellen 31, 31' werden optimale elastische Eigenschaften erzielt.

Die Funktionsweise der erfindungsgemässen Lagerung von Textilmaschinen, die nach dem Offen-End-Spinnverfahren arbeiten, wird nachstehend näher beschrieben:

Bereits bei geringer Drehzahl wird die rotierende Masse des Spinntopfes 5, der Hohlwelle 2 und des Rotorankers 3, 4 durch eine undefinierte, im Spinntopf 5 verursachte, sowohl in Betrag und Richtung veränderliche Unwucht in ihrer Laufruhe gestört. Bis zu einem bestimmten kritischen Drehzahlbereich wird diese Störung der Laufruhe, die sich in Taumelbewegungen des Rotors 2, 3, 4, 5 äussert, kontinuierlich zunehmen, um nach Erreichen dieser kritischen Drehzahl bis zum Nenndrehzahlbereich wieder abzunehmen, ohne jedoch vollständig zu verschwinden. Die Hohlwelle 2 des Rotors 3, 4, 5, die in einem ersten Radialgleitlager 10 im Bereich des Schwerpunktes des Rotors 2, 3, 4, 5 auf dem Lagerträger 26 und am entgegengesetzten Ende in einem zweiten Radialgleitlager 11, ebenfalls auf dem Lagerträger 26, gelagert ist, kann als ein geführter Kreisel angesehen werden, dessen unwuchtbehaftete rotierende Masse jederzeit weitgehend ungestört um ihre Hauptträgheitsachse drehen kann. Bei der kinematischen Führung des Rotors 2, 3, 4, 5 gemäss des vorliegenden Erfindungsgegenstandes werden die auf die Lager ausgeübten Zwangskräfte eliminiert, in dem die vom Rotor 2, 3, 4, 5 ausgeübten Trägheitskräfte und Kreiselmomente durch das Trägerlagergelenk 27 von den Radialgleitlagern 10, 11 entkoppelt werden. Die federnden Lamellen 31, 31' des Trägerlagergelenkes 27 ermöglichen infolge ihrer radial auslenkbaren, den Lagerträger 26 mitsamt Radiallagern 10, 11 und die Hohlwelle 2 in jeden Drehzahlbereich koaxial führenden und elastisch rückstellenden Eigenschaften, den vom Rotor 2, 3, 4, 5 eingeprägten Kräften zu folgen und schliessen somit die Ausübung von Zwangskräften auf die Lager 10, 11, die zum vorzeitigen Verschleiss oder zur Zerstörung führen würden, aus. Zur Unterstützung dieser zwangsfreien kinematischen Führung der Hohlwelle 2 dienen die flexiblen Abstützungen 28, 28', die sowohl auf dem Lagerzapfen 9, als auch im Lagerkörper 26 angeordnet sein können.

Bei der hier betrachteten Offen-End-Spinntechnologie muss weiterhin berücksichtigt werden, dass der die Hohlwelle 2 führende und den Lagerträger 26 tragende Lagerzapfen 9 nur einseitig fest mit dem Gehäuse 6 des Elektromotors 1 verbunden ist, und dass der Lagerzapfen 9 am spinntopfseitigen Ende nicht befestigt ist. Durch diese konstruktiv notwendige Massnahme ergeben sich zusätzliche Instabilitäten in der Führung des Rotors 2, 3, 4, 5 die sich den obengenannten eingeprägten Trägheitskräften und Kreiselmomenten noch überlagern. Die im Spinntopf 5 und/oder den Radialgleitlagern 10, 11 verursachten und auf den Rotor 2, 3, 4 übertragenen Schwingungen werden über den Lagerzapfen 9 und das Gehäuse 6 des Elektromotors 1 zu den schwingungsdämpfenden Elementen 29 geführt und von diesen eliminiert.

Die gasdynamischen Radial- 10, 11 und Axialgleitlager 19, 23; 20, 24 arbeiten in Verbindung mit dem elastisch schwenkbaren Lagerkörper 26 wie folgt:

Bei Maschinenstillstand haben die Funktionsflächen 19, 21 des ersten — 19, 23 und die Funktionsflächen 14, 20 des zweiten Axiallagers 20, 24 Berührungskontakt. Ebenso können sich bei Maschinenstillstand die Funktionsflächen 17, 18 des ersten 10-und zweiten Radiallagers 11 mit den gegenüberliegenden Funktionsflächen 25, 25' des Lagerträgers 26 berühren. Jedoch findet bei bereits geringer Drehzahl des Rotors 2, 3, 4, 5, sowohl in den beiden Axiallagern 19, 23; 20, 24 als auch in den beiden Radiallagern 10, 11 ein Druckaufbau statt und es bildet sich selbsttätig ein konvergierender Spalt einmal zwischen den Funktionsflächen 19, 21 des ersten Axiallagers 19, 23 und den Funktionsflächen 14, 20 des zweiten Axiallagers 20, 24 und zum anderen zwischen den Funktionsflächen 17, 25 des ersten Radiallagers 10 und den Funktionsflächen 18, 25' des zweiten Radiallagers 11 aus.

Selbstverständlich beschränkt sich die Lagerung der Hohlwelle 2 mitsamt der rotierenden Teile 3, 4, 5 nicht nur auf gasdynamische Radial- 10, 11 und Axialgleitlager 19, 23; 20, 24. Darüber hinaus können im Rahmen der vorliegenden Erfindung ebenfalls gasstatische, hydrodynamische und hydrostatische Gleitlager sowie Wälzlager in den verschiedensten Arten zur Anwendung gelangen. Die Wahl der Lagerung hängt in erster Linie von der Rotordrehzahl ab.

## Patentansprüche

1. Offen-End-Spinnvorrichtung mit einem Spinntopf (5), der auf einer Hohlwelle (2) befestigt ist, und mit einem Elektromotor, bestehend aus Stator (6 bis 9) und Rotor (3, 4), wobei der Rotor (3, 4) aussen auf der Hohlwelle (2) befestigt ist, dadurch gekennzeichnet, dass die Hohlwelle (2) auf einem festehenden Lagerzapfen (9) aufgesteckt ist, dass auf dem Lagerzapfen (9) ein hülsenförmiger Lagerkörper (26) aufgesetzt ist, dass der hülsenförmige Lagerkörper (26) über ein radial zentrierendes, elastisches Lagerkörpergelenk (27) mit dem Lagerzapfen (9) verbunden ist und dass der Lagerkörper (26) an seinem Aussenumfang Radialgleitlager (10, 11) trägt, auf welchen die Hohlwelle (2) innen gelagert ist.

2. Vorrichtung nach Anspruch 1, dadurch gekennzeichnet, dass das Lagerkörpergelenk (27) im Bereich des Schwerpunktes des Rotors (3, 4), der Hohlwelle (2) und des Spinntopfes (5) angeordnet ist.

3. Vorrichtung nach Anspruch 1 und 2, dadurch gekennzeichnet, dass in einer radialen Nut (9'') des Lagerzapfens (9) gegenüber dem spinntopfseitigen Ende eine elastische Abstützung (28), vorgesehen ist, auf welche sich mit seiner inneren Fläche der Lagerkörper (26) abstützt, wodurch der Lagerkörper (26) gegenüber dem Lagerzapfen (9) elastisch schwenkbar geführt ist.

4. Vorrichtung nach Anspruch 1 und 2, dadurch gekennzeichnet, dass in einer radialen Nut (26') des Lagerkörpers (26) gegenüber dem spinntopfseitigen Ende eine elastische Abstützung (28) vorgesehen ist, wodurch der Lagerkörper (26) gegenüber dem Lagerzapfen (9) elastisch auslenkbar geführt ist.

5. Vorrichtung nach einem der Ansprüche 1 bis 4, dadurch gekennzeichnet, dass der Elektromotor (1) mit wenigstens einem schwingungsdämpfenden Element (29) in einem Maschinengehäuse (30) gelagert ist, um die im Spinntopf (5) und/oder in den Radialgleitlagern (10, 11) verursachten, und auf den Rotor

(2, 3, 4) übertragenen Schwingungen über den Lagerzapfen (9) und das Gehäuse (6) des Elektromotors (1) zu den schwingungsdämpfenden Elementen (29) zu führen, wo sie eliminiert werden.

6. Vorrichtung nach Anspruch 1 bis 3, dadurch gekennzeichnet, dass das Lagerkörpergelenk (27) hohlzylindrisch ausgebildet ist und aus einem elastischen Material besteht, wobei die Elastizität des Lagerkörpergelenkes (27) sowohl durch das Material als auch durch dessen geometrische Ausbildung und Dimensionierung bestimmt ist.

7. Vorrichtung nach Anspruch 6, dadurch gekennzeichnet, dass das Lagerkörpergelenk (27) aus einem hohlzylindrischen Körper besteht, in dessen Inneren ein Kontaktring (32) angeordnet ist, dessen Innenbohrung (32') dem äusseren Durchmesser des Lagerzapfens (9) in der Kontaktstelle entspricht, und dass parallel zur Achse des Lagerkörpergelenkes (27) Schlitze (33, 34) ausgeführt sind, die sich nahezu über die gesamte Höhe der Zylinderfläche und wenigstens teilweise in den Kontaktring (34) hinein erstrecken, wodurch im Lagerkörpergelenk (27) elastische Lamellen (31, 31') gebildet werden.

8. Vorrichtung nach Anspruch 1, 6 und 7, dadurch gekennzeichnet, dass das Lagerkörpergelenk (27) mit seiner äusseren Fläche (35) mit dem Lagerkörper (26) und mit den Flächen (36, 36') des Kontaktringes (32) mit dem Lagerzapfen (9) jeweils fest verbunden ist.

9. Vorrichtung nach Anspruch 6 bis 8, dadurch gekennzeichnet, dass zwischen den elastischen Lamellen (31, 31') des Lagerkörpergelenkes (27) und dem Lagerzapfen (9) ein Spalt (40) ausgebildet ist, um eine Auslenkbewegung des Lagerkörpergelenkes (27) zu ermöglichen.

10. Vorrichtung nach einem der Ansprüche 1 bis 9, dadurch gekennzeichnet, dass auf dem Lagerkörper (26) im Bereich des Schwenkpunktes des Rotors (2, 3, 4, 5) ein erstes gasdynamisches Radialgleitlager (10) und gegenüber dem spinntopfseitigen Endabschnitt des Lagerkörpers (26) ein zweite gasdynamisches Radialgleitlager (11) angeordnet sind, welche Lager (10, 11) einstückig oder fest mit dem Lagerkörper (26) verbunden sind.

11. Vorrichtung nach Anspruch 6 bis 10, dadurch gekennzeichnet, dass das Lagerkörpergelenk (27) aus Stahl besteht.

12. Vorrichtung nach einem der Ansprüche 1 bis 10, dadurch gekennzeichnet, dass der Lagerkörper (26) und die Funktionsflächen (25, 25') des Lagerzapfens (9) aus Hartwerkstoffen bestehen oder Oberflächen aufweisen, die aus Hartwerkstoffen bestehen oder welche Oberflächen gehärtet sind.

13. Vorrichtung nach Anspruch 3 bis 5, dadurch gekennzeichnet, dass sowohl die elastischen Abstützungen (28, 28') als auch das schwingungsdämpfende elastische Element (29) aus Gummi bestehen.

**Claims**

1. Open-end spinning apparatus with a spinning can (5) fastened to a hollow shaft (2), and with an electric motor consisting of a stator (6-9) and a rotor (3, 4), the rotor (3, 4) being fastened to the outside of the hollow shaft (2), characterised in that the hollow shaft (2) is attached on a fixed bearing journal (9), in that a sleeve-shaped bearing body (26) is attached on the bearing journal (9), in that the sleeve-shaped bearing body (26) is connected to the bearing journal (9) via a radially centreing elastic bearing-body joint (27), and in that the bearing body (26) carries an its outer periphery radial plain bearings (10, 11), on which the hollow shaft (2) is mounted on the inside.

2. Apparatus according to Claim 1, characterised in that the bearing-body joint (27) is located in the region of the centre of gravity of the rotor (3, 4), the hollow shaft (2) and the spinning can (5).

3. Apparatus according to Claims 1 and 2, characterised in that, in a radial groove (9'') of the bearing journal (9) there is, opposite the end adjacent to the spinning can, an elastic support (28), on which the bearing body (26) is supported by means of its inner surface, as a result of which the bearing body (26) is guided so as to be elastically pivotable relative to the bearing journal (9).

4. Apparatus according to Claims 1 and 2, characterised in that in a radial groove (26') of the bearing body (26) there is an elastic support (28) opposite the end adjacent to the spinning can, with the result that the bearing body (26) is guided so as to be elastically deflectable relative to the bearing journal (9).

5. Apparatus according to one of Claims 1 to 4, characterised in that the electric motor (1) is mounted in a machine housing (30) by means of at least one vibration-damping element (29), in order to guide the vibrations produced in the spinning can (5) and/or in the radial plain bearings (10, 11) and transmitted to the rotor (2, 3, 4), via the bearing journal (9) and the housing (6) of the electric motor (1), to the vibration-damping elements (29) where they are eliminated.

6. Apparatus according to Claims 1 to 3, characterised in that the bearing-body joint (27) is of hollow-cylindrical design and consists of an elastic material, the elasticity of the bearing-body joint (27) being determined both by the material and by its geometrical design and dimensions.

7. Apparatus according to Claim 6, characterised in that the bearing-body joint (27) consists of a hollow-cylindrical body, in the interior of which is located a contact ring (32), the inner bore (32') of which corresponds to the outer diameter of the bearing journal (9) at the contact point, and in that there are parallel to the axis of the bearing-body joint (27) slits (33, 34) which extend virtually over the entire height of the cylinder surface and at least partially into the contact ring (34), thus forming elastic lamellae (31, 31') in the bearing-body joint (27).

8. Apparatus according to Claims 1, 6 and 7, characterised in that the bearing-body joint (27) is connected firmly by means of its outer surface (35) to the bearing body (26) and by means of the surfaces (36, 36') of the contact ring (32) to the bearing journal (9).

9. Apparatus according to Claims 6 to 8, characterised in that a gap (40) is formed between the elastic lamellae (31, 31') of the bearing-body joint (27) and the bearing journal (9), to allow a deflecting movement of the bearing-body joint (27).

10. Apparatus according to one of Claims 1 to 9, characterised in that a first gas-dynamic radial plain bearing (10) is arranged on the bearing body (26) in the region of the centre of gravity of the rotor (2, 3, 4, 5), and a second gas-dynamic radial plain bearing (11) is arranged opposite the end portion of the bearing body (26) adjacent to the spinning can, these bearings (10, 11) being connected in one piece or firmly to the bearing body (26).

11. Apparatus according to Claims 6 to 10, characterised in that the bearing-body joint (27) is made of steel.

12. Apparatus according to one of Claims 1 to 10, characterised in that the bearing body (26) and the functional surfaces (25, 25') of the bearing journal (9) consists of hard materials or have surfaces which consist of hard materials or which are hardened.

13. Apparatus according to Claims 3 to 5, characterised in that both the elastic supports (28, 28') and the vibration-damping elastic element (29) are made of rubber.

## Revendications

1. Dispositif de filature à fibre libérée avec un pot (5) qui est fixé sur un arbre creux (2), et avec un moteur électrique (1) composé d'un stator (6 à 9) et d'un rotor (3, 4), dans lequel le rotor (3, 4) est fixé extérieurement sur l'arbre creux (2), caractérisé en ce que l'arbre creux (2) est engagé sur un tourillon fixe (9), en ce qu'un corps de palier (26) en forme de douille est monté sur le tourillon (9), en ce que le corps de palier (26) en forme de douille est assemblé au tourillon (9) par l'intermédiaire d'une articulation (27) du corps de palier, articulation élastique à centrage radial, et en ce que le corps de palier (26) porte à sa périphérie extérieure des paliers lisses radiaux (10, 11), sur lesquels l'arbre creux (2) prend intérieurement appui.

2. Dispositif suivant la revendication 1, caractérisé en ce que l'articulation (27) du corps de palier est disposée dans la région du centre de gravité du rotor (3, 4), de l'arbre creux (2) et du pot (5).

3. Dispositif suivant une des revendications 1 et 2, caractérisé en ce qu'il est prévu, dans une rainure radiale (9'') du tourillon (9) à l'opposé de l'extrémité située du côté du pot, un appui élastique (28), sur lequel le corps de palier (26) s'appuie par sa face intérieure, disposition grâce à laquelle le corps de palier (26) est guidé élastiquement par rapport au tourillon (9).

4. Dispositif suivant une des revendications 1 et 2, caractérisé en ce qu'il est peévu, dans une rainure radiale (26') du corps de palier (26), à l'opposé de l'extrémité située du côté du pot, un appui élastique (28), grâce auquel le corps de palier (26) peut être élastiquement dévié par rapport au tourillon (9).

5. Dispositif suivant l'une des revendications 1 à 4, caractérisé en ce que le moteur électrique (1) est maintenu dans un bâti de machine (30) par au moins un élément d'amortissement des vibrations (29), afin de reporter, par l'intermédiaire du tourillon (9) et de la carcasse (6) du moteur électrique (1), jusqu'aux éléments d'amortissement (29) où elles sont éliminées, les vibrations suscitées dans le pot (5) et/ou dans les paliers radiaux (10, 11) et communiquées au rotor (2, 3, 4).

6. Dispositif suivant une des revendications 1 à 3, caractérisé en ce que l'articulation (27) du corps de palier a la forme d'un cylindre creux et est constituée d'un matériau élastique, ce qui permet de réaliser l'élasticité de l'articulation (27) du corps de palier aussi bien par le matériau que par sa forme géométrique et par ses dimensions.

7. Dispositif suivant la revendication 6, caractérisé en ce que l'articulation (27) du corps de palier se compose d'un corps cylindrique creux, à l'intérieur duquel est disposée une bague de contact (32) dont l'alésage intérieur (32') présente un diamètre correspondant au diamètre extérieur du tourillon (9) dans la zone de contact, et en ce qu'il est ménagé, parallèlement à l'axe de l'articulation (27) du corps de palier, des fentes (33, 34), qui s'étendent sur presque toute la hauteur de la surface du cylindre et au moins en partie jusque dans la bague de contact (32), formant ainsi des lamelles élastiques (31, 31') dans l'articulation (27) du corps de palier.

8. Dispositif suivant les revendications 1, 6 et 7, caractérisé en ce que l'articulation (27) du corps de palier est rigidement assemblée par sa surface extérieure (35) au corps de palier (26) et par les surfaces (36, 36') de la bague de contact (32) au tourillon (9).

9. Dispositif suivant une des revendications 6 à 8, caractérisé en ce qu'il est ménagé entre les lamelles élastiques (31, 31') de l'articulation (27) du corps de palier et le tourillon (9) une fente (40), destinée à permettre un mouvement de déviation de l'articulation (27) du corps de palier.

10. Dispositif suivant une des revendications 1 à 9, caractérisé en ce que, sur le corps de palier (26), dans la région du centre de gravité du rotor (2, 3, 4, 5), est disposé un premier lisse radial (10) gazodynamique et qu'à l'opposé de la section d'extrémité du corps de palier (26) situé du côté du pot est disposé un deuxième palier lisse radial (11) gazodynamique, paliers qui sont d'une seule pièce avec le corps de palier (26) ou qui y sont rigidement fixés.

11. Dispositif suivant une des revendications 6 à 10, caractérisé en ce que l'articulation (27) du corps de palier est en acier.

12. Dispositif suivant une des revendications 1 à 10, caractérisé en ce que le corps de palier (26) et les surfaces travaillantes (25, 25') du tourillon (9) sont réalisés en materiau dur ou présentent des surfaces qui sont constituées de matériau dur ou qui sont durcies.

13. Dispositif suivant les revendications 3 à 5, caractérisé en ce que tant les appuis élastiques (28, 28') que les éléments élastiques (29) d'amortissement des vibrations sont constitués de caoutchouc.

FIG.1

**FIG.2**

**FIG.3**

**FIG.4**